# EUROPEAN PATENT APPLICATION

(11) **EP 4 332 424 A1**
(43) Date of publication of application: **06.03.2024**
(21) Application number: 23192083.6
(22) Date of filing: 18.08.2023
(51) Int. Cl.: F17C 5/00, F17C 13/00, F17C 13/12

(54) **FILLING HOSE GUIDE DEVICE**

(30) Priority: 05.09.2022 JP 2022140534
(71) Applicant: Tatsuno Corporation, Tokyo 108-0073 (JP)
(72) Inventor: TAKEZAWA, Masahiro, Tokyo, 108-0073 (JP); TSUGUMI, Yoshitaka, Tokyo, 108-0073 (JP); OTO, Yoshimi, Tokyo, 108-0073 (JP); OUCHI, Toshihiko, Tokyo, 108-0073 (JP)
(74) Representative: Isarpatent

(57) **Abstract**

[OBJECT] To provide a filling hose guide device for preventing a plug of a safety joint or a filling hose from being locked in a lower opening of a casing when a safety joint separates, thereby preventing a filling device from falling over and being damaged.

[SOLUTION] A filling hose guide device 100 according to the present invention is characterized in that after a plug 10 connected to a filling hose 61 and a socket 20 provided in a filling device 200 in a safety joint 300 separate when a tensile load above a predetermined level is applied to the filling hose 61, the filling hose guide devices 100 include: a rotatable or deformable member 30A, 30B, with which the filling hose 61 contacts, below the safety joint 300; and a support structure 50, through which the filling hose 61 passes, for supporting the rotatable or deformable member 30A, 30B.

## Description

### Field of the Invention

The present invention relates to a filling hose guide device used, for example, in a filling device for filling gas such as hydrogen gas used as fuel, and the filling hose guide device guides a filling hose after a safety joint having a function of separating the filling device and the filling hose in an emergency separates.

### Description of the Related Art

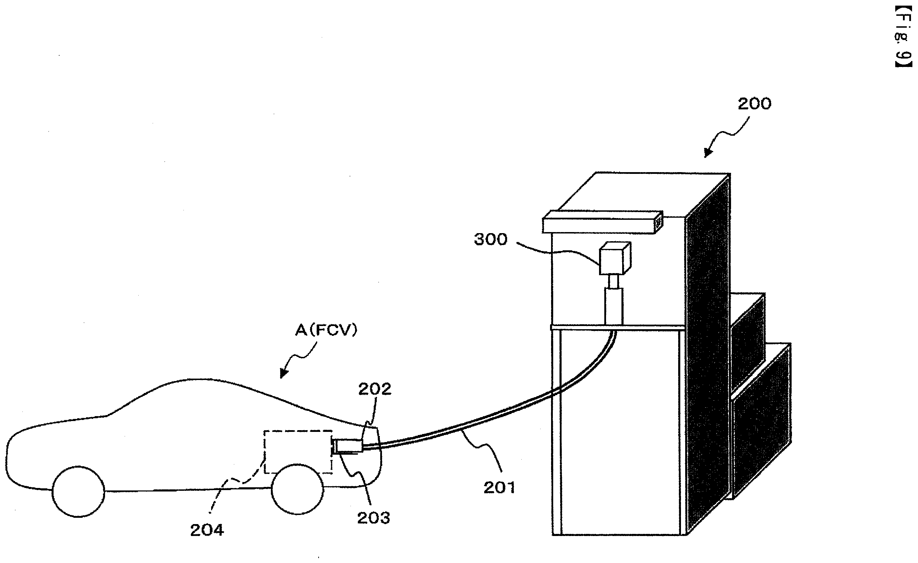

In a vehicle A (for example, a fuel cell vehicle, FCV) that runs on hydrogen as a fuel, as shown in Fig. 9, hydrogen gas is filled by connecting a filling nozzle 202 provided at a tip of a filling hose 201 and a filling port 203 mounted to the vehicle A in a hydrogen filling facility. Although it is an extremely rare case, there is a case where the vehicle A starts moving for some reason without a worker who is doing a hydrogen filling operation being aware of it. Similarly, although it is an extremely rare case, there is a case where another vehicle collides with the vehicle A that is being filled with hydrogen without a worker who is doing a hydrogen filling operation being aware of it. In such cases, the filling hose 201 will be pulled, the filling device 200 will overturn and break, and a flammable hydrogen gas will spout out, resulting in a dangerous situation. In order to avoid such situations, a safety joint 300 for emergency release is provided in a region between the filling device 200 and the filling hose 201, and the safety joint 300 separates when a tensile load of a predetermined level or over acts on the filling hose 201. Thus, the filling device 200 is prevented from being damaged. Separation of the safety joint 300 is an extremely rare event and does not occur on a daily basis.

Even if the filling hose 201 is not subjected to a tensile load of a certain level or above, when the filling hose 201 swings, the moment due to the swinging is applied to a filling hose mounting portion of a vehicle-side member (plug) of the safety joint 300. There is a risk that the mounting portion will be damaged and a hydrogen gas will leak from the damaged portion. In response to this, the applicant has proposed a measure to prevent the plug of the safety joint 300 from being damaged by the moment caused by the swinging motion of the filling hose 201 (see JP-B-6590159 gazette).

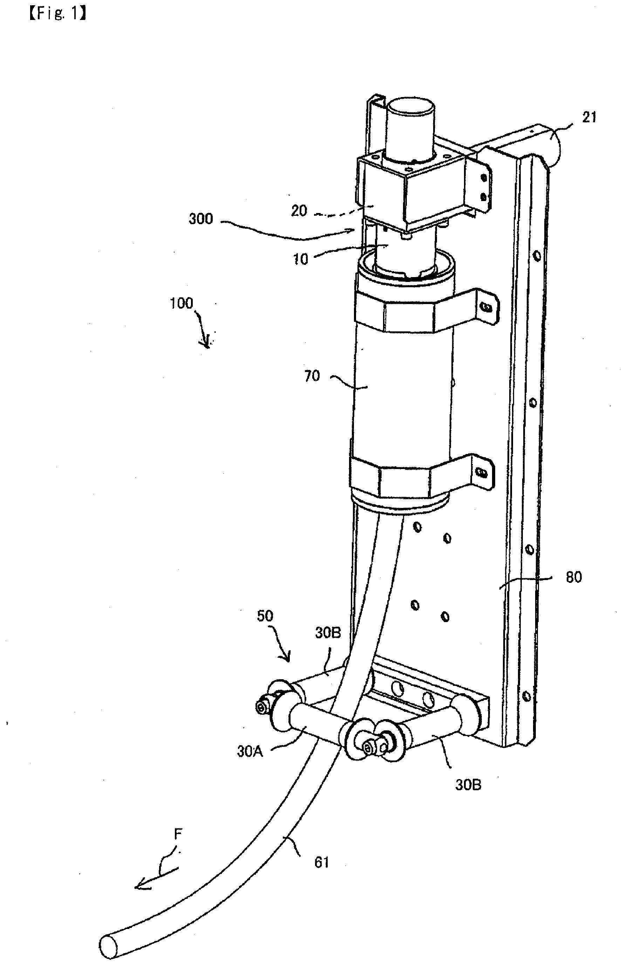

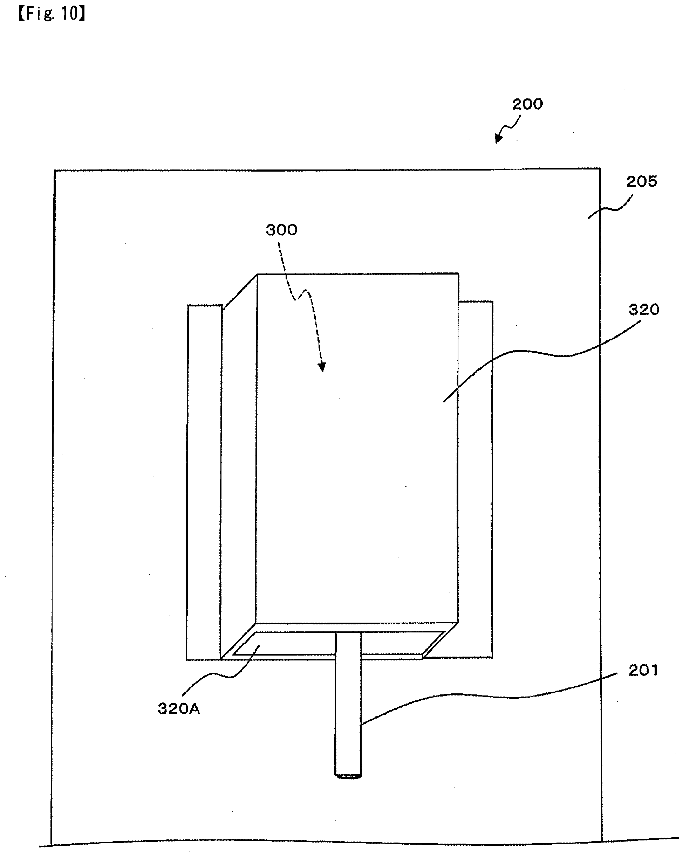

In Fig. 10, the safety joint 300 described above (indicated only by the dashed lead line in Fig. 10) is built in a casing 320 of the filling device 200. Reference numeral 205 indicates an element of the casing of the hydrogen filling device. The safety joint 300 includes a plug (a member on the vehicle A side of the safety joint, refer to Fig. 1, not shown in Fig. 10) 10 connected to the filling hose 201, and a socket 20 (refer to Fig. 1, not shown in Fig. 10) that is a member on the hydrogen filling device side, and the plug separates from the socket (the safety joint 300 separates) when a tensile load greater than or equal to a predetermined value acts. In the above conventional art, when the safety joint 300 separates, the filling hose 201 and the plug coupled thereto pass a hollow portion of a guide member (built into the casing 320 but not shown in Fig. 10) and escape from a lower opening 320A of the casing 320.

When the vehicle A unexpectedly starts or moves, however, the force pulling the hydrogen filling device 200 acts horizontally (laterally) as well as vertically, which may cause the plug 10 to be caught (locked) in the lower opening 320A. When the vehicle unexpectedly starts and the safety joint 300 separates, if the plug 10 locks in the lower opening 320A, the force of the vehicle pulling the filling hose 201 will be transmitted to the hydrogen filling device 200 via the locking point between the plug 10 and the lower opening 320A of the casing 320, which may cause the hydrogen filling device 200 to overturn.

In addition, since a spring, an infrared fiber, a mesh, etc. are arranged around an outer periphery of the filling hose 201, and a cover of the filling hose 201 is also present, the filling hose 201 more likely to lock (get caught) with the lower opening 320A of the casing 320. That is, in addition to the plug 10 at the tip of the filling hose 201 being locked to the lower opening 320A, there is a possibility that the filling hose 201 will be locked to the casing lower opening 320A. For this reason, even if the safety joint 300 separates when the vehicle A unexpectedly starts or moves, there is a risk that the vehicle will pull the hydrogen filling device 200 (refer to Fig. 9) and overturn and damage the hydrogen filling device 200. The conventional art described above is not intended to deal with such a situation.

The content of JP-B-6590159 gazette is incorporated herein by reference in its entirety.

### SUMMARY OF THE INVENTION

### Problems to be Solved by the Invention

The present invention has been proposed in view of the above-mentioned problems of the prior art, and the object thereof is to provide a filling hose guide device for preventing the plug of the safety joint or the filling hose from being locked in the lower opening of the casing when the safety joint separates, thereby preventing the filling device from falling over and being damaged.

Filling hose guide devices 100, 100-1 to 100-6 according to the present invention for guiding a filling hose 61 after a plug 10 connected to the filling hose 61 and a socket 20 provided in a filling device 200 in a safety joint 300 separate when a tensile load above a predetermined level is applied to the filling hose 61 are characterized by including: a rotatable or deformable member 30, with which the filling hose 61 contacts, below the safety joint 300; and a support structure 50, through which the filling hose 61 passes, for supporting the rotatable or deformable member 30.

In the filling hose guide device 100-1, the deformable member 30 is preferably a spiral elastic body (spiral spring) 30B-1. Here, the spiral elastic body 30B-1 is preferably set so as to be elastically deformed by a tensile force acting through the filling hose 61.

In the filling hose guide device 100-2, the rotatable member 30 is preferably a roller 30B-2 having an outer diameter gradually changing in a central axis direction and a sinusoidal outer shape.

In the filling hose guide device 100-3, it is preferable that the rotatable member 30 is a roller 30B-3, the roller 30B-3 being made of an elastically deformable material such as resin including urethane resin and hard sponge, and a slit SL having a size that allows a rod 10D of the plug 10 to pass is formed on the roller 30B-3.

In the filling hose guide device 100-4, it is preferable that the rotatable members 30 are two rollers 30B-4, and each of the rollers 30B-4 is rotatable about an axis in a direction of horizontal movement of the filling hose 61 and has an outer diameter that gradually increases in the direction of the horizontal movement.

In the filling hose guide device 100-5, it is preferable that the rotatable member 30 is a roller 30B-5, a diameter of which is large at both ends in a direction of a central axis, and its diameter is small at a center in the direction of the central axis, and its diameter changes gradually and smoothly.

In the filling hose guide device 100-6, the rotatable member 30 is preferably a plurality of rotating bodies 30-6 rotatable around a central axis arranged in a U shape. The shape of the rotor 30-6 is preferably, for example, an abacus bead shape, but may be a sphere. Preferably, the gap between the adjacent rotors 30-6 is larger than the diameter of the rod 10D so that the rod 10D of the plug 10 does not engage the gap between the adjacent rotors 30-6.

### EFFECTS OF THE INVENTION

Since the rotatable or deformable member 30 is provided below the safety joint 300, the filling hose 61 is restrained from swinging to protect the plug 10, and the safety joint 300 can separate with a predetermined tensile load by restricting the angle of the hose 61 pulled by the vehicle A. Even if the vehicle A starts moving during a hydrogen filling operation, therefore, the plug 10 and the socket 20 are separated, and the tension of the filling hose 61 does not act on the main body of the hydrogen filling device. Even if the filling hose 61 or the plug 10 at the tip thereof comes into contact with the rotatable or deformable member 30, the member 30 rotates or deforms, and the plug 10 and the filling hose 61 move to release the stuck (caught) state, so that the hydrogen filling device 200 can be prevented from being damaged.

Here, if the deformable member 30 is composed of a spiral elastic body 30B-1, the plug 10 and the filling hose 61 slide on an arc-shaped surface of the spiral elastic body 30B-1, and the engagement (hooking) of the body 30B-1 with a support structure 50-1 itself is prevented. In addition, since the spiral elastic body 30B-1 is elastically deformed (flexed) in any direction, the plug 10 and the filling hose 61 can be moved to a position where engagement with the support structure 50-1 is released. In addition, there is no need to separately provide a mechanism for deforming or moving the spiral elastic body 30B-1 itself, and the labor for manufacturing the support structure 50-1 is reduced accordingly. Furthermore, if the elastic modulus of the spiral elastic body 30B-1 is set so that it is elastically deformed under a load slightly larger than the detachment load of the plug, when the filling hose 61 contacts the arc-shaped surface of the elastic body 30B-1, the filling hose 61 slides on the arcuate surface of the elastic body 30B-1 to suppress the swinging of the filling hose 61, and when a tensile force due to the start of the vehicle A is applied, the elastic body 30B-1 is elastically deformed to expand the interval between the windings, which prevents the plug 10 or the rod 10D from being caught between the elastic bodies 30B-1.

Here, the casing 320 suppresses bending and curving of the separated filling hose 61, preventing the plug 10 from falling outside the support structure 50-1 and the filling hose 61 from being caught on the support structure 50-1. If the guide member 70 is extended to the vicinity of the support structure 50-1, however, the guide member 70 can play the role of the casing 320. In such a case, the casing 320 may be provided in the present invention, but it is also possible to omit it.

In addition, in the filling hose guide device 100-2, if the outer diameter of the rotatable member 30 changes gradually in the central axis direction and the outer shape is composed of a roller 30B-2 having a sinusoidal shape, even if the roller 30B-2 and the plug 10 come into contact with each other, the rotation of the roller 30B-2 prevents the roller 30B-2 and the plug 10 from engaging (getting caught). Further, if the relative positional relationship is such that the rod 10D of the plug 10 passes through the portion of the roller 30B-2 with a small diameter, even if the roller 30B-2 does not rotate, the plug 10 and the roller 30B-2 are separated and disengaged to allow the plug 10 to exit the support structure 50-2.

In the filling hose guide device 100-3, if the rotatable member 30 is composed of a roller 30B-3 made of a deformable material such as resin (for example, urethane resin) or hard sponge, when a support structure 50-3 and the plug 10 are engaged with each other, if a tensile force acts on the plug 10 through the filling hose 61, the deformable material forming the roller 30B-3 is elastically deformed by the tensile force, and the plug 10 can be disengaged from the support structure 50-3. Here, if a slit SL is formed on the roller 30B-3 and the width of the slit SL is set so that the rod 10D of the plug 10 can pass through, when the plug 10 is fitted into the slit SL, the rod 10D can be prevented from removing from the slit SL.

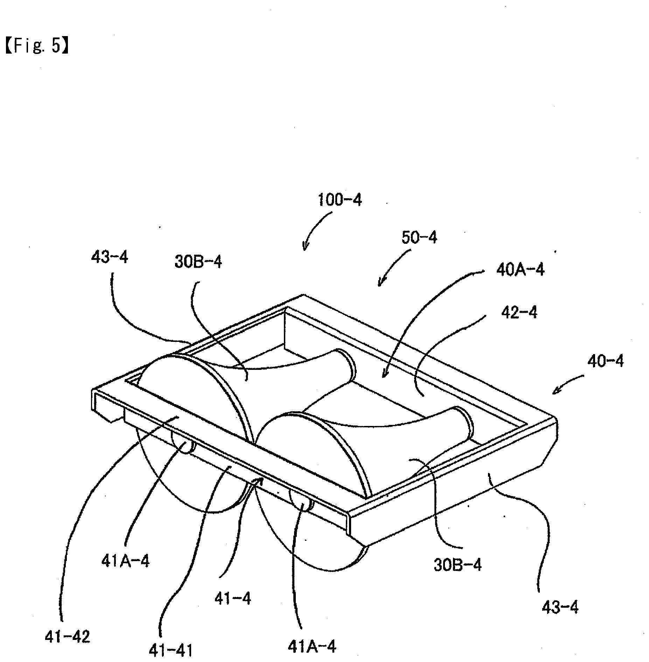

Further, in the filling hose guide device 100-4, the rotatable member 30 is composed of two rollers 30B-4 that can rotate around a horizontal axis and whose outer diameter decreases progressively toward the horizontal movement direction (right side of Fig. 5), the plug 10 or the filling hose 61 contacts the roller 30B-4, the plug 10 or the filling hose 61 does not engage the roller 30B-4 due to the rotation of the roller 30B-4.

The space (gap) between the rollers 30B-4 becomes larger toward the horizontal movement direction, so when the plug 10 or the filling hose 61 contacts the roller 30B-4, the plug 10 or the filling hose 61 can smoothly move to the right in Fig. 5, where the gap between the rollers 30B-4 is larger, and can exit the gap between the rollers 30B-4 of the support structure 50-4.

In the filling hose guide device 100-5, it is possible that the rotatable member 30 can be composed of one roller 30B-5, and the roller 30B-5 may have a diameter of which is large at both ends in a direction of a central axis, and its diameter is small at a center in the direction of the central axis, and its diameter changes gradually and smoothly. With this, if the plug 10 comes into contact with the roller 30B-5, rotating the roller 30B-5 prevents the plug 10 and the roller 30B-5 from being engaged. In addition, when the plug 10 is disengaged from the socket 20 and the filling hose 61 and the plug 10 are pulled, the filling hose 61 moves in the axially central portion where the diameter of the roller 30B-5 is small. This is because the central portion in the axial direction has a large space and can be moved with less resistance. The plug 10 is therefore difficult to engage with the support structure 50-5 (difficult to get caught).

In the filling hose guide device 100-6, when the rotatable member 30 is composed of a plurality of rotating bodies 30-6 rotatable around a central axis arranged in a U shape, even if the plug 10 and the filling hose 61 contact with the rotating bodies 30-6, the rotating bodies 30-6 rotate about the rotation axis, so that the plug 10 and the filling hose 61 are prevented from engaging with a plurality of rotating bodies 30-6. Here, if the gap between the adjacent rotating bodies 30-6 is larger than the diameter of the rod 10D, it is possible to prevent the rod 10D from fitting between the adjacent rotating bodies 30-6.

### BRIEF DESCRIPTION OF THE DRAWINGS

[Figure 1] An explanatory view showing an outline of an embodiment of this invention.
[Figure 2] An explanatory view showing a support structure according to the first embodiment of the present invention.
[Figure 3] An explanatory view showing a main part of a support structure according to the second embodiment of the present invention.
[Figure 4] An explanatory view showing rollers used in the third embodiment of the present invention.
[Figure 5] An explanatory view showing a support structure according to the fourth embodiment of the invention.
[Figure 6] An explanatory view showing an outline of a support structure according to the fifth embodiment of the present invention.
[Figure 7] An explanatory view showing a support structure according to the sixth embodiment of the present invention.
[Figure 8] An explanatory view showing the shape of a plug in the embodiments of the present invention.
[Figure 9] An explanatory view showing an outline of a hydrogen filling facility.
[Figure 10] A view showing a safety joint attached to a hydrogen filling device.

### MODE FOR CARRYING OUT THE NVENTION

Hereinafter, embodiments of the present invention will be described with reference to the accompanying drawings. Before describing the embodiments, an overview of the illustrated embodiment will be described with reference to Fig. 1. In Fig. 1, illustration of the casing 320 (a rectangular casing main body, excluding the hydrogen filling device 200 side: see Fig. 10) is omitted. Figure 1 shows a safety joint 300 including a plug 10 (a vehicle-side member of the safety joint) connected to a filling hose 61 and a socket 20, which is a member of the hydrogen filling device. As shown in Fig. 9, the safety joint 300 is attached to the hydrogen filling device 200. The safety joint 300 has a function of separating the plug 10 from the socket 20 (separating the safety joint) when a tensile load greater than or equal to a predetermined amount acts on the filling hose 61. When the safety joint 300 separates, the filling hose 61 and the plug 10 are configured to move through a hollow portion of the guide member 70 and exit from the lower opening 320A (Fig. 10) of the casing 320. Below the safety joint 300 and the guide member 70 is mounted a filling hose guide device 100 according to the embodiment of the present invention, and the device 100 includes rollers 30A and 30B, which are rotatable or deformable members, and a support structure 50 for supporting it. The plug 10 and the socket 20 are housed within the casing 320. In Fig. 1, the plug 10 indicated by a solid lead line is coupled to the socket 20 indicated by a dashed lead line.

Hydrogen gas is supplied from a hydrogen filling device (not shown in Fig. 1) to the socket 20 through a hydrogen gas pipe 21, and then through the plug 10 and the filling hose 61 to the filling nozzle (202 in Fig. 9) into the hydrogen tank 204 (Fig. 9) of the vehicle A. A rotatably arranged front roller 30A and two side rollers 30B are arranged in the opening 320A at a lower portion of the casing 320 (Fig. 10) (vehicle A side of the filling hose 61: lower in Fig. 1). In the support structure 50 shown in Fig. 1, the central axis of the front roller 30A and the central axes of the two adjacent side rollers 30B are orthogonal, but the front roller 30A and the side rollers 30B are configured to freely rotate about their respective rotation axes.

In the state shown in Fig. 1, the plug 10 and the socket 20 are mated, but when the plug 10 is separated from the socket 20, the plug 10 or the fill hose 61 contacts the support structure 50. The front roller 30A and/or the side roller 30B thereby rotate such that the plug 10 or the filling hose 61 does not engage an edge of the casing opening 320A (see Fig. 10) or the support structure 50 and moves away from the hydrogen filling device 200. Moving in a direction of being pulled by the vehicle A (direction of the arrow F), the plug 10 and the filling hose 61 are smoothly pulled out of the casing 320, preventing the hydrogen filling device 200 from overturning and being damaged. In addition, providing the support structure 50 below the safety joint 300, the swinging of the filling hose 61 is suppressed to protect the plug 10, and the angle of the filling hose 61 pulled by the vehicle A is regulated to allow the safety joint 300 to be separated with a predetermined tensile load.

A substrate 80 is provided on the hydrogen filling device 200 side (right side in Fig. 1) of the casing 320 (Fig. 10), which is not shown in Fig. 1, and the guide member 70 and the support structure 50 are attached to the substrate 80. There is no roller on the substrate 80 side. When the vehicle A is to be filled with hydrogen, the vehicle A is parked on the front side (left side in Fig. 1) of the hydrogen filling device 200 or on the side thereof, and hydrogen is filled. The vehicle A does not stop on the substrate 80 side, that is, at the back side of the hydrogen filling device 200 to fill with hydrogen. When the vehicle A starts moving, therefore, the filling hose 61 is not pulled toward the substrate 80 or the back side of the hydrogen filling device 200, and it is not necessary to provide a roller on the substrate 80 side.

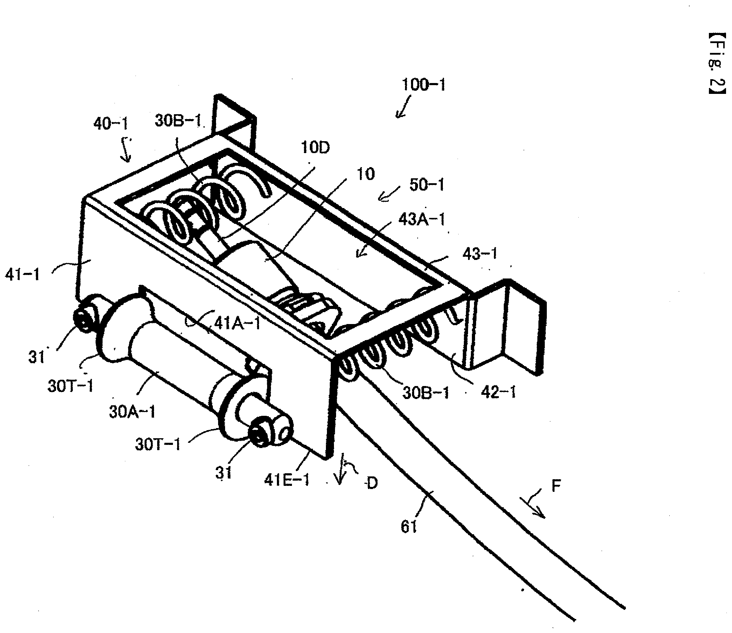

In Fig. 1, it may be possible to make it difficult for the filling hose 61 or the plug 10 to be engaged with (being caught by) the lower opening by increasing the cross-sectional area of the opening 320A without the front roller 30A and the side rollers 30B in the opening 320A (Fig. 10) of the casing 320. There is a design requirement however that the casing 320 should be basically small. If the support structure 50 is not provided and the casing 320 is too large, the angle of the filling hose 61 pulled by the vehicle A becomes large with respect to the casing central axis (vertical axis). This increases the horizontal force acting on the safety joint 300 (Fig. 10) and may prevent the plug 10 from separating from the socket 20 under a given tensile load. It is therefore desirable that the casing 320 is as small as possible, and the lower opening 320A of the casing 320 cannot be enlarged. Here, even if the opening 320A (Fig. 10) of the casing 320 is smoothly rounded, the curvature cannot be reduced because the thickness of the casing 320 is small. In addition, the surface of the filling hose 61 has irregularities because a spring, an infrared fiber, a mesh, and the like are arranged around the outer periphery of the hose. Unless the opening of the casing moves relative to the filling hose 61 due to the tensile force acting on the filling hose 61, the filling hose 61 will lock at the opening of the casing. With the embodiments shown in Figs. 2-8, no such problem arises.

In addition, the casing 320 suppresses bending and curving of the separated filling hose 61 to prevent the plug 10 from falling outside the support structure 50 and the filling hose 61 from being caught in the support structure 50. Extending the guide member 70 to the vicinity of the support structure 50 can play the role of the casing 320. Although the casing 320 is provided in the present invention, it is also possible to omit it.

First, the first embodiment of the present invention will be described with reference to Fig. 2. Figure 2 shows essential parts of a filling hose guide device 100-1 according to the first embodiment, showing a structure corresponding to the support structure 50 in Fig. 1. In Fig. 2, the filling hose guide device 100-1 has a support structure 50-1, and the support structure 50-1 includes a front roller 30A-1 and two springs 30B-1 (helical elastic body: helical spring). The support structure 50-1 has a support member 40-1 with a front portion 41-1, a rear portion 42-1 and a top portion 43-1. Near both ends of the front roller 30A, the front roller 30A-1 is rotatably supported by shaft supports 31 provided on the surface of the front portion 41-1 opposite to the hydrogen filling device 200 side (the left surface in Fig. 2). Each of the two springs 30B-1 in Fig. 2 has one end fixed to the front portion 41-1 and the other end fixed to the rear portion 42-1. The fixation is performed in a conventionally known manner such as welding. A large opening 43A-1 is formed on the upper surface portion 43-1 of the support member 40-1. When the plug 10 and the socket 20 are separated, the separated plug 10 and the filling hose 61 connected thereto pass through the opening 43A-1 and move in the direction of being pulled by the vehicle A (direction of the arrow F). The width of the opening 43-1 (the width in the longitudinal direction of the spring 30B-1) is set so that the plug 10 can sufficiently pass through.

In the first embodiment shown in Fig. 2, the spring 30B-1 is used as a rotatable or deformable member, so that even if the plug 10 or the filling hose 61 comes into contact with the spring 30B-1, it slides on a circular arc of the winding of the spring 30B-1, so it is possible to prevent itself from engaging (hooking) the support structure 50-1. At that time, the rod 10D in the plug 10 can pass through the gaps between the windings of the spring 30B-1. In addition, the spring 30B-1 can be elastically deformed (flexed) in any direction due to the elasticity (or flexibility) of the spring 30B-1 itself. It can be easily moved to a position where it disengages (no longer hooks) the structure 50-1. Since the spring 30B-1 can be elastically deformed (flexed) in any direction, there is no need to separately provide a mechanism for deforming or moving the spring, and manufacturing labor and cost for the support structure 50-1 can be decreased accordingly.

In the first embodiment shown in Fig. 2, the elastic modulus of the spring 30B-1 is designed such that when the plug 10 or the filling hose 61 comes into contact with the spring 30B-1, the spring 30B-1 does not deform, but the spring 30B-1 elastically deform by the tensile force acting on the spring 30B-1 through the filling hose 61. When the plug 10 or the filling hose 61 contacts the arcuate surface of the spring 30B-1, therefore, it slides on the arcuate surface. Even if the plug 10 or the filling hose 61 is caught between the springs 30B-1, the springs 30B-1 will elastically deform if a tensile force is applied when the vehicle A starts moving, and the plugs 10 or the rods 10D are pulled from the spring 30B-1 and the plugs 10 or the rods 10D can exit from the spring 30B-1. Alternatively, the spacing between the windings of the spring 30B-1 increases and the plug 10 or the filling hose 61 disengages from the spring 30B-1.

In Fig. 2, the lower edge of the front roller 30A-1 protrudes downward (in the direction of the arrow D in Fig. 2) from the lower edge 41E-1 of the front portion 41-1 of the support member 40-1. Collar portions 30T-1 of the roller 30A-1 are inserted into the front opening 41A-1. In a case where the front roller 30A-1 includes a rotating shaft and a hollow rotating body, when the collar portions 30T-1 are inserted into the front opening 41A-1, the hollow rotating body is regulated to move relative to the rotating shaft in the axial direction of the rotating body. Although not shown, the front roller 30A-1 can also be replaced with a helical spring similar to the spring 30B-1. Other configurations and effects in the first embodiment shown in Fig. 2 are the same as those described with reference to Fig 1.

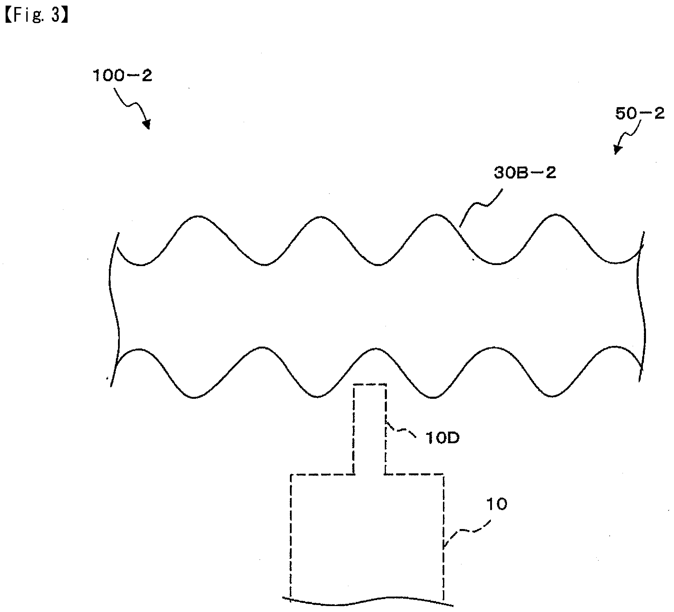

The second embodiment of the present invention will now be described with reference to Fig 3. In the second embodiment shown in Fig. 3, instead of the spring 30B-1 (helical spring) of the first embodiment shown in Fig. 2, a side roller 30B-2 whose outer diameter gradually changes in the longitudinal direction (center axis direction) of the roller is provided. In Fig. 3, a filling hose guide device 100-2 according to the second embodiment has a support structure 50-2, and the support structure 50-2 has a side roller 30B-2 which is a rotatable member. Although two side rollers 30B-2 are provided, only one side roller 30B-2 is shown in Fig. 3. The outer shape of the side roller 30B-2 has a cross-sectional diameter that gradually changes in a sinusoidal curve in the longitudinal direction. Here, the side roller 30B-2 and its rotating shaft may be configured integrally, or the side roller 30B-2 may be configured in the shape of a hollow rotating body and configured separately from its rotating shaft. Although not shown, the side roller 30B-2 is rotatably supported by the substrate 80 (Fig. 1) on the side of the hydrogen filling device via a support member forming part of the support structure 50-2.

Since the outer shape of the roller 30B-2 is configured such that its diameter changes in a sinusoidal shape, when the relative positional relationship is such that the rod 10D of the plug 10 passes through the portion of the roller 30B-2 whose diameter is small, even if the roller 30B-2 does not rotate, the filling hose 61 and the plug 10 can exit without engaging the support structure 50-2. Other configurations and effects in the second embodiment shown in Fig. 3 are the same as those described with reference to Figs. 1 and 2.

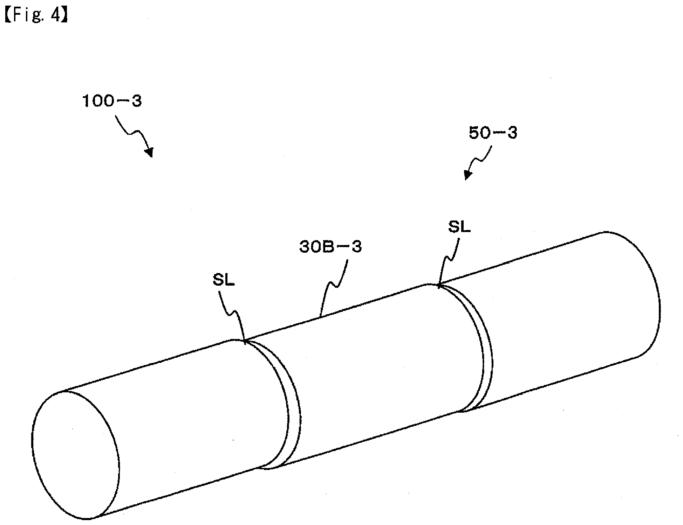

The third embodiment of the present invention will be described with reference to Fig. 4. A filling hose guiding device 100-3 according to the third embodiment shown in Fig. 4 differs from the filling hose guiding device 100 shown in Fig. 1 in the rollers, especially the side rollers 30B-3. Only one side roller 30B-3 is shown in Fig. 4, and the side roller 30B-3 is a rotatable or deformable member of the support structure 50-3 in the third embodiment. Although not clearly shown, the side roller 30B-3 can be made of a deformable material such as resin (eg, urethane resin) or hard sponge. In the support structure 50-3, when the plug 10 engages the side roller 30B-3, and a tensile force acts on the plug 10 through the filling hose 61, a material such as urethane resin or hard sponge constituting the side roller 30B-3 elastically deforms by the tensile force to release the engagement state between the plug 10 and the side roller 30B-3. Although not shown in Fig. 4, the side roller 30B-3 is rotatably supported on the substrate 80 (Fig. 1) on the side of the hydrogen filling device via a support member forming a part of the support structure 50-3.

In Fig. 4, the side roller 30B-3 made of urethane resin or hard sponge is formed with, for example, two slits SL at approximately equal intervals in an axial direction (longitudinal direction) and the width of the slit SL is set to allow the rod 10D (see Figs. 2 and 3) of the plug 10 to pass therethrough. The slit SL can also be formed at one location. As described above, since the side roller 30B-3 is made of a deformable material, when the plug 10 is fitted in the slit SL, and a force that causes the rod 10D to remove from the slit SL (pulling the filling hose 61) is applied, the side roller 30B-3 deforms and the rod 10D does not get stuck in the slit SL. Other configurations and effects in the third embodiment shown in Fig. 4 are the same as those described with reference to Figs. 1 to 3.

The filling hose guide device shown in Fig. 1 is provided with three rollers 30A and 30B, and they are arranged to form three sides of a rectangle. In the present invention, however, the number of rollers is not limited to three, and the arrangement is not limited to forming three sides of a rectangle. A support structure 50-4 of a filling hose guide device 100-4 according to the fourth embodiment shown in Fig. 5 has two side rollers 30B-4 as rotatable members. The two side rollers 30B-4 correspond to the side rollers 30B in Fig. 1. The support structure 50-4 has a support member 40-4 with a front portion 41-4, a rear portion 42-4 and side portions 43-4, the side portions 43-4 connecting the front portion 41-4 and the rear portion 42-4. The rear portion 42-4 is fixed to the substrate 80 (Fig. 1) not shown. The upper surface of the support member 40-4 is open to form an opening 40A-4, and when the plug 10 and the socket 20 are separated, the separated plug 10 and the filling hose 61 pass through the opening 40A-4 and move in a direction pulled by the vehicle A. Shaft supports 41A-4 are provided in the vicinity of both ends in the longitudinal direction (horizontal direction in Fig. 5) of the front surface 41-4, and the shaft supports 41A-4 rotatably support one ends of the two side rollers 30B-4. The other ends of the two side rollers 30B-4 are rotatably supported in the vicinity of both ends in the longitudinal direction (horizontal direction in Fig. 5) of the back surface portion 42-4. The front portion 41-4 has a first member 41-41 on which the shaft supports 41A-4 are arranged and a second member 41-42 extending above the first member 41-41. The first member 41-41 and the second member 41-42 are arranged so as to be perpendicular to each other.

In Fig. 5, the two side rollers 30B-4 have a large diameter on the front side (left side in Fig. 5) of the filling hose guide device 100-4, and the diameter of the rollers smoothly gradually decreases toward the substrate 80 side (right side in Fig. 5). The space (or the dimension of the gap) between the two side rollers 30B-4 becomes larger toward the substrate 80 (right side in Fig. 5). Constructing and arranging the two side rollers 30B-4 as described above allows, when the side rollers 30B-4 and the plug 10 or the filling hose 61 come into contact, the plug 10 or the filling hose 61 to move to the side roller 30B-4 due to rotation of the side roller 30B-4 or sliding on the surface of the side roller 30B-4, then, the plug 10 or the filling hose 61 smoothly moves to the substrate 80 side (right side in Fig. 5) where the gap between the side rollers 30B-4 is large and is able to exit from the gap. In Fig. 5, the two side rollers 30B-4 are supported at both ends in the longitudinal direction. It is also possible that a portion of the support member 40-4 that supports the large-diameter side end of the side roller 30B-4 (the left end in Fig. 5), that is, the front portion 41-4 may be omitted to form a so-called "cantilever". In terms of strength, however, it is preferable to support both ends. Other configurations and effects in the fourth embodiment shown in Fig. 5 are the same as those described with reference to Figs. 1 to 4.

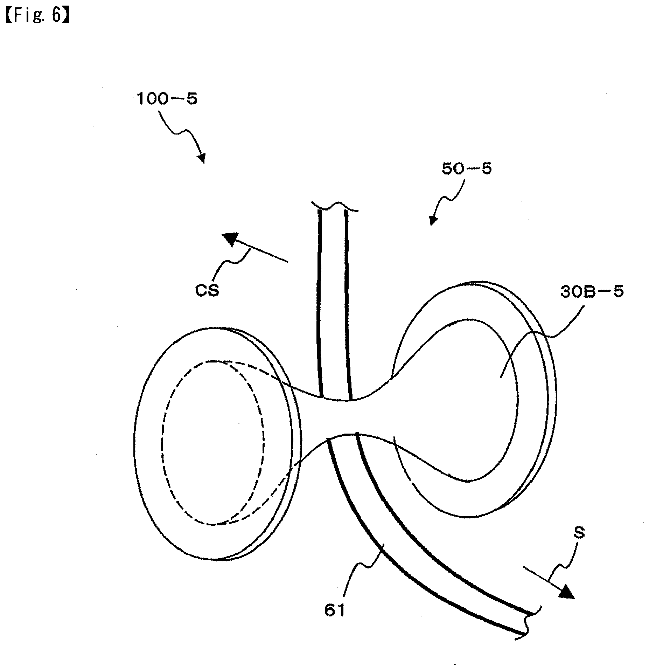

The fifth embodiment of the present invention will now be described with reference to Fig. 6. A filling hose guide device 100-5 according to the fifth embodiment in Fig. 6 has a support structure 50-5, the support structure 50-5 having a single rotatable member, a side roller 30B-5 (hand drum-shaped roller). The hand drum-shaped roller 30B-5 has a large diameter at both ends in a central axis direction and a small diameter at the center in the central axis direction with gradually and smoothly changing diameter. The hand drum-shaped roller 30B-5 is rotatably supported by the substrate 80 (Fig. 1) on the side of the hydrogen filling device via a part of the support structure 50-5.

Configuring the hand drum-shaped roller 30B-5 as shown in Fig. 6 allows, when the plug 10 is detached from the socket 20 and the filling hose 61 and the plug 10 are pulled in a direction of the arrow S in Fig. 6, the filling hose 61 and the plug 10 to slide on the surface of the hand drum-shaped roller 30B-5 and to move in an axial center portion where the diameter is small. The axial center portion of the hand drum-shaped roller 30B-5 having a small diameter has a large open space and the filling hose 61 and the plug 10 can move with little resistance, and the plug 10 is difficult to engage (hardly get caught) with the support structure 50-5. When the filling hose 61 and the plug 10 move, even if the plug 10 contacts the hand drum-shaped roller 30B-5, the plug 10 and the hand drum-shaped roller 30B-5 are not engaged with each other due to the rotation of the hand drum-shaped roller 30B-5. Other configurations and effects in the fifth embodiment shown in Fig. 6 are the same as those described with reference to Figs. 1 to 5.

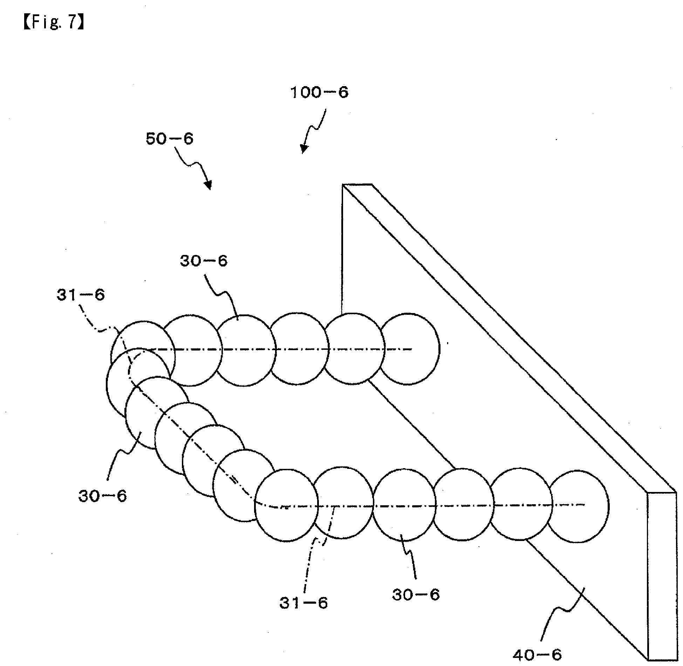

The sixth embodiment of the present invention will be described with reference to Fig. 7. A filling hose guide device 100-6 according to the sixth embodiment in Fig. 7 has a support structure 50-6, and the support structure 50-6 has a plurality (or a large number) of rotating bodies 30-6 (rotatable members). In the filling hose guide device 100-6, the front roller 30A and the side rollers 30B in the filling hose guide device 100 shown in Fig. 1 are replaced with a plurality of (17 total in Fig. 7) rotating bodies 30-6. A central axis 31-6 of the plurality of rotating bodies 30-6 is indicated by a one-dot chain line in Fig. 7, the axis 31-6 being generally U-shaped. Each of the plurality of rotors 30-6 is rotatable around the central axis 31-6. The U-shaped rotating shaft 31-6 of the plurality of rotating bodies 30-6 is supported at both ends thereof by the substrate 80 (Fig. 1) on the side of the hydrogen filling device via a supporting member 40-6. Although not clearly shown, the rotating body 30-6 has the shape of an abacus bead. It may be a sphere, however, and other shapes are applicable as long as it is a body of revolution. Although not clearly shown, the gap between the adjacent rotors 30-6 is set larger than the diameter of the rod 10D of the plug 10 to prevent the rod 10D from fitting (engaging) in the gap between the adjacent rotors 30-6.

In the sixth embodiment shown in Fig. 7, when the plug 10 and the filling hose 61 come into contact with the plurality of rotating bodies 30-6, the rotating bodies 30-6 rotate around the rotating shaft 31-6, so that the plug 10 and the filling hose 61 are prevented from engaging the multiple rotating bodies 30-6. Since the gap between the adjacent rotors 30-6 is set larger than the diameter of the rod 10D of the plug 10, it is possible to prevent the rod 10D from fitting between the adjacent rotors 30-6. Other configurations and effects in the sixth embodiment in Fig. 7 are the same as those described with reference to Figs. 1 to 6.

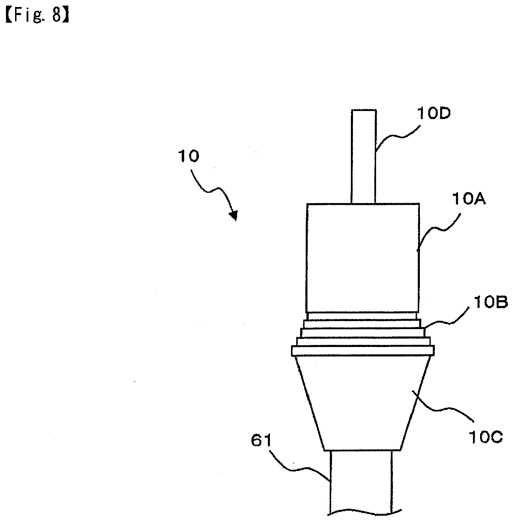

Figure 8 shows a modification of the plug 10 of the illustrated embodiments, and the plug 10 in Fig. 8 has a body portion 10A, an intermediate portion 10B, a tapered portion 10C, and a rod 10D on the connection side with the socket. The tapered portion 10C gradually decreases in diameter from the intermediate portion 10B toward the lower end (lower end in Fig. 8), and the filling hose 61 is connected to the lower end of the tapered portion 10C. Forming the filling hose 61 side of the plug 10 with the tapered portion 10C causes no stepped portion to be on the plug 10 side and the filling hose 61 side. Even if the socket 20 and the plug 10 are separated and the plug 10 comes into contact with the front roller 30A and/or the side roller 30B arranged in the opening 320A (Fig. 10) of the casing 320, the tapered portion 10C makes smooth contact with the rollers 30A and 30B without engaging with the rollers 30A and 30B, which allows the plug 10 to be easily pulled out of casing 320.

It should be noted that the illustrated embodiments are merely examples and are not intended to limit the technical scope of the present invention.

### DESCRIPTION OF THE REFERENCE NUMERALS

10 plug (vehicle side member of safety joint)
10D rod
20 socket (member on filling device side of safety joint)
30 rotatable or deformable member
30A front roller
30B side roller
30B-1 spring (helical elastic body)
30B-2 sinusoidal roller
30B-3 roller made of deformable material
30B-4 roller with a large diameter on the front side and gradually decreasing in diameter toward the substrate side.
30B-5 hand drum-shaped roller
30-6 a plurality of rotating bodies rotatable around a central axis arranged in a U-shape
50, 50-1 to 50-6 support structures for supporting rotatable or deformable members
61 filling hose
100, 100-1 to 100-6 filling hose guide devices
200 hydrogen filling device
320 casing
320A opening below the casing
SL slit formed on the roller

## Claims

1. A filling hose guide device for guiding a filling hose after a plug connected to a filling hose and a socket provided in a filling device in a safety joint separate when a tensile load above a predetermined level is applied to the filling hose,
said filling hose guide device comprising:
a rotatable or deformable member, with which the filling hose contacts, below the safety joint; and
a support structure, through which the filling hose passes, for supporting the rotatable or deformable member.

2. The filling hose guide device as claimed in claim 1, wherein said deformable member is a spiral elastic body.

3. The filling hose guide device as claimed in claim 1, wherein said rotatable member is a roller having an outer diameter gradually changing in a central axis direction and a sinusoidal outer shape.

4. The filling hose guide device as claimed in claim 1, wherein said rotatable member is a roller, said roller being made of an elastically deformable material, and a slit having a size that allows a rod of the plug to pass is formed on the roller.

5. The filling hose guide device as claimed in claim 1, wherein said rotatable members are two rollers, and each of the rollers is rotatable about an axis in a direction of horizontal movement of the filling hose and has an outer diameter that gradually increases in the direction of the horizontal movement.

6. The filling hose guide device as claimed in claim 1, wherein said rotatable member is a roller, a diameter of which is large at both ends in a direction of a central axis, and its diameter is small at a center in the direction of the central axis, and its diameter changes gradually and smoothly.

7. The filling hose guide device as claimed in claim 1, wherein said rotatable member is a plurality of rotating bodies rotatable around a central axis arranged in a U shape.
